(19) Europäisches Patentamt

European Patent Office

Office européen des brevets

(11) **EP 1 000 338 B1**

(12) **EUROPÄISCHE PATENTSCHRIFT**

(45) Veröffentlichungstag und Bekanntmachung des Hinweises auf die Patenterteilung:
**21.05.2003 Patentblatt 2003/21**

(51) Int Cl.7: **G01N 11/16**

(21) Anmeldenummer: **98943820.5**

(22) Anmeldetag: **31.07.1998**

(86) Internationale Anmeldenummer:
**PCT/EP98/04817**

(87) Internationale Veröffentlichungsnummer:
**WO 99/006816 (11.02.1999 Gazette 1999/06)**

(54) **Verfahren zur Erfassung rheologischer Materialeigenschaften**

Method for detecting rheological properties of a material

Procédé pour détecter les caractéristiques rhéologiques d'une matière

(84) Benannte Vertragsstaaten:
**AT DE DK NL**

(30) Priorität: **31.07.1997 DE 19733114**

(43) Veröffentlichungstag der Anmeldung:
**17.05.2000 Patentblatt 2000/20**

(73) Patentinhaber: **Max-Planck-Gesellschaft zur Förderung der Wissenschaften e.V. 80539 München (DE)**

(72) Erfinder: **WILHELM, Manfred D-67487 Maikammer (DE)**

(74) Vertreter: **Hertz, Oliver, Dr. v. Bezold & Sozien, Akademiestrasse 7 80799 München (DE)**

(56) Entgegenhaltungen:
**US-A- 4 754 640        US-A- 5 452 614**

- REIMERS M J ET AL: "Sliding plate rheometer studies of concentrated polystyrene solutions: Large amplitude oscillatory shear of a very high molecular weight polymer in diethyl phthalate" JOURNAL OF RHEOLOGY, Bd. 40, Nr. 1, Februar 1996, Seiten 167-186, XP002088771 ISSN 0148-6055
- OAKLEY J G ET AL: "A sliding plate normal thrust rheometer for molten plastics" POLYMER ENGINEERING AND SCIENCE, Bd. 34, Nr. 7, April 1994, Seiten 580-584, XP002088772 ISSN 0032-3888
- KRIEGER I M ET AL: "A rheometer for oscillatory studies of nonlinear fluids" RHEOLOGICA ACTA, Bd. 12, Nr. 3-4, Dezember 1973, Seiten 567-571, XP002088773 ISSN 0035-4511
- GAMOTA D R ET AL: "Fourier transform analysis: nonlinear dynamic response of an electrorheological material" JOURNAL OF RHEOLOGY, Bd. 37, Nr. 5, Oktober 1993, Seiten 919-933, XP002088774 ISSN 0148-6055 in der Anmeldung erwähnt
- BAUMGAERTEL M ET AL: "Determination of discrete relaxation and retardation time spectra from dynamic mechanical data" RHEOLOGICA ACTA, Bd. 28, Nr. 6, Dezember 1989, Seiten 511-519, XP002088775 ISSN 0035-4511

## Beschreibung

Die Erfindung betrifft Verfahren zur Erfassung rheologischer Materialeigenschaften, insbesondere zur Messung rheologischer Parameter, z. B. der Viskosität, flüssiger, fließfähiger oder elastischer Materialien und zur Klassifizierung des dynamischen Verhaltens der Materialien auf der Grundlage der gemessenen Parameter, und Vorrichtungen zur Implementierung der Verfahren.

Bei der Bewegung flüssiger oder fließfähiger Materialien (im folgenden generell als Flüssigkeiten bezeichnet) treten mikroskopische Wechselwirkungen der Flüssigkeitsteilchen auf, die sich als innerer Widerstand oder innere Reibung auf das makroskopische Verhalten (Zähigkeit) auswirken und z. B. die Beweglichkeit, Fließfähigkeit, Handhabbarkeit und dgl. der Flüssigkeit beeinflussen.

Das makroskopische Verhalten einer bewegten Flüssigkeit wird insbesondere durch die Viskosität η quantifiziert, die gemäß Gleichung (1) mit der Kraft F in Beziehung steht, die man aufbringen muß, um zwei parallele Platten (Flüssigkeitsschichten) der Fläche A und des Abstands d mit der Schergeschwindigkeit v gegeneinander zu bewegen:

$$F/A = \eta \cdot v/d$$

bzw.:

$$F \sim \eta v = \eta \dot{x} \tag{1}$$

Bei genügend geringen Scherraten v/d ist η eine Materialkonstante. In diesem Fall spricht man von Newtonischer Viskosität oder Newtonischen Flüssigkeiten. Es ist bekannt, daß bei Überschreitung einer gewissen Scherrate die Kraft F nicht mehr proportional zur Schergeschwindigkeit v wächst. In diesem Fall sog. nicht-Newtonischer Viskosität oder nicht-Newtonischer Flüssigkeiten gibt es Scherverdickungen oder Scherverdünnungen, bei denen jeweils entsprechend eine Vergrößerung oder Verkleinerung der erforderlichen Scherkräfte bei Steigerung der Geschwindigkeit auftritt.

Die Beschreibung des Übergangs vom linearen Fall Newtonischer Viskosität zum nichtlinearen Fall nicht-Newtonischer Viskosität und die Charakterisierung des nichtlinearen Zustands besitzt eine große technische Bedeutung, da Scherverdickungen oder Scherverdünnungen (Scherverflüssigungen) bei allen praktisch relevanten Scherraten bei technischen Vorgängen wie z. B. Pumpen, Spritzgießen, Extrudieren, Rühren o. dgl. oder auch in hydraulischen Systemen wie Viskokupplungen vorkommen.

Es ist allgemein bekannt, daß die Viskosität mit verschiedenen Meßanordnungen wie z. B. Kapillarviskosimeter, Fallkörperviskosimeter, Schwingungsviskosimeter usw. erfaßbar ist. Die Messung des nichtlinearen Zustands ist jedoch bisher sehr aufwendig oder nur beschränkt möglich. Die Aufnahme der Geschwindigkeitsabhängigkeit der Viskosität ist mit den bekannten Anordnungen nicht oder nur unter hohem Zeitaufwand und mit geringer Genauigkeit möglich. Es sind auch keine praktikablen Echtzeit-Viskositätsmessungen für technologische Abläufe verfügbar.

Ein weiteres Problem bei der Handhabung von strömenden Flüssigkeiten betrifft die Erfassung der Orts-Zeit-Funktionen zur Ermittlung von Geschwindigkeiten oder Beschleunigungen. Dies ist zwar prinzipiell möglich, ergibt jedoch wegen der starken Rauschempfindlichkeit der gemessenen Rohdaten bei praktischen Anwendungen bisher keine verwertbaren Ergebnisse. Die genannten Probleme der bekannten Meßverfahren betreffen nicht nur die Viskosität, sondern auch damit in Zusammenhang stehende Materialparameter wie z. B. Relaxationszeiten im nichtlinearen Zustand oder die Energiedissipation durch innere Reibung.

Aus der Publikation von D.R. Gamota et al. in "J. Rheol.", Band 37, 1993, S. 919 ff., ist eine Analyse viskoelastischen Verhaltens ausschließlich von elektrorheologischen Materialien unter Verwendung einer Fourier-Analyse von Shear-Response-Signalen nach harmonischer Anregung des Materials bekannt. Es wird das viskoelastische Verhalten in Abhängigkeit von der Amplitude einer äußeren Hochspannung beschrieben.

Aus der Publikation von J.M. Reimers et al. In "Journal of Rheology" Band 40, 996, Seite 167 ff sind rheologische Untersuchungen an konzentrierten Polysterenlösungen bekannt. Zur Untersuchung des nichtlinearen Verhaltens werden Meßsignale einer Fast-Fourier-Analyse unterzogen, um eine qualitative Unterscheidung von linearem und nicht linearem Verhalten des untersuchten Materials treffen zu können. Von I.M. Krieger et al. wird in "Rheol.Acta" Band 12, 1973, Seite 567 ff, ein Rheometer für Schwingungsstudien an nicht linearen Flüssigkeiten beschrieben, bei dem ebenfalls eine Fast-Fourier-Analyse zur Meßwertauswertung durchgeführt wird. Aus US 4 754 640 ist ein Rheometer zur Bestimmung der linearen viskoelastischen Eigenschaften einer Flüssigkeit bekannt.

Die Aufgabe der Erfindung ist es, verbesserte Verfahren zur Erfassung rheologischer Materialeigenschaften, wie z. B. der Viskosität, flüssiger oder fließfähiger Materialien anzugeben, die insbesondere eine schnelle und genaue Messung im linearen und/ oder nichtlinearen Zustand des untersuchten Materials erlauben.

Diese Aufgabe wird durch ein Verfahren mit den Merkmalen der Gegenstände von Patentanspruch 1 gelöst. Vorteilhafte Ausführungsformen ergeben sich aus den abhängigen Ansprüchen. Die Merkmale des Oberbegriffs des Anspruchs 1 sind aus der oben zitierten Publikation von Gamota et al bekannt.

Der Erfindung liegt die Idee zugrunde, bei einer an sich bekannten Verfahrensweise zur Viskositätsmessung (z. B. mit einem Schwingungsviskosimeter) nach einer harmonischen Anregung des zu untersuchenden Materials von einer direkten Auswertung eines Meßsignals, das die Materialreaktion auf die Anregung charakterisiert, abzugehen und statt dessen das Meßsignal durch Erfassung seiner Zeitabhängigkeit und Fourier-Transformation im Frequenzraum auszuwerten. Die Erfinder haben festgestellt, daß bei einer herkömmlichen Viskositätsmessung, die eigentlich nur für Materialien im linearen oder Newtonischen Zustand vorgesehen ist, beim Übergang in den Frequenzraum weitergehende Informationen über rheologische Materialeigenschaften, insbesondere auch im nichtlinearen oder nicht-Newtonischen Zustand, zugänglich werden.

Rheologische Materialeigenschaften sind alle Eigenschaften, die die innere Reibung und somit das Fließ- oder Strömungsverhalten des untersuchten Materials und deren Abhängigkeit von der Schergeschwindigkeit, der Temperatur, dem Druck und dgl. charakterisieren. Eine harmonischen Anregung umfaßt jede Form der Anregung mechanischer Schwingungen der Massenelemente eines untersuchten Materials entsprechend einer harmonischen Zeitfunktion. Diese ist vorzugsweise als Sinusfunktion darstellbar, kann aber auch eine Überlagerung einer Mehrzahl von Sinusfunktionen beinhalten. Die harmonische Anregung wird vorzugsweise durch einen mechanischen Schwinger gebildet, der Teil z.B. eines herkömmlichen Schwingungsviskosimeters ist. Das Meßsignal, das die Materialreaktion auf die Anregung charakterisiert, ist im Fall eines Schwingungsviskosimeters beispielsweise eine vom mechanischen Schwinger im Material aufgebrachte Kraft (oder Drehmoment) oder andernfalls auch eine vom Material übertragene Druckkraft.

Die gemessene Kraftgröße kann eine makroskopische Kraft oder eine Meßgröße sein, die für den lokalen Streß oder die lokal wirkende Kraft im Material charakteristisch ist. Eine lokale Kraftgröße läßt sich beispielsweise auf der Grundlage der sogenannten "Stress-optical-relation" durch eine optische Messung ermitteln. Es ist beispielsweise möglich, während der mechanischen Anregung des Materials die Intensität der optischen Doppelbrechung im Material in Abhängigkeit von der Zeit zu ermitteln. Da entsprechend der "Stress-optical-relation" die optische Doppelbrechung mit der lokalen Kraft in einem linearen Zusammenhang steht, kann erfindungsgemäß die Auswertung der Zeitabhängigkeit der Intensität der optischen Doppelbrechung analog zur Auswertung makroskopischer Kraftgrößen verlaufen.

Erfindungsgemäß wird durch die Fourier-Transformation der Zeitabhängigkeit des Meßsignals ein Scherspektrum gebildet, aus dem die Parameter einer Taylorentwicklung der Viskosität, ein lineares oder nichtlineares Verhalten des Materials, ein Zustand der Scherverdickung, nichtlineare Relaxationszeiten im Material, nach einer Fourier-Rücktransformation Orts-Zeit-Funktionen, Geschwindigkeiten und/oder Beschleunigungen der Massenelemente strömender Flüssigkeiten, und/oder sog. "Memory"-Effekte im Material erfaßt werden.

Eine Vorrichtung zur Durchführung des erfindungsgemäßen Verfahrens enthält eine Meßanordnung (z. B. ein Schwingungs- oder Rotationsviskosimeter) zur Messung der Zeitfunktion eines charakteristischen rheologischen Parameters, eine Transformationsanordnung zur Fourier-Transformation der Zeitfunktion in den Fourier-Raum und/oder zur entsprechenden Rücktransformation und eine Steuer- und Anzeigeeinheit, die zur Einstellung der Betriebsparameter der Meßanordnung und zur Datenübernahme von der Transformationsanordnung eingerichtet ist. Die Meßanordnung kann Teil eines Regelkreises zur Erfassung des beginnenden Übergangs des Materials zum nichtlinearen Verhalten oder zu einer Scherverdickung sein.

Falls eine optische Messung (Intensität der Doppelbrechung) erfolgt, so wird die Meßanordnung entsprechend durch Bereitstellung transparenter Anregungselemente modifiziert. So können beispielsweise die Begrenzungsplatten am zu untersuchungenden Material, mit denen Anregungskräfte auf das Material übertragen werden sollen, aus Glas hergestellt sein. Die optische Messung besitzt gerätetechnische Vorteile in Bezug auf die Messung der Zeitabhängigkeit der im Material wirkenden Kräfte.

Die erfindungsgemäß vorgesehene Fourier-Analyse erlaubt die Ermittlung der nichtlinearen Terme der Taylorentwicklung der Viskosität in Bezug auf die Geschwindigkeit oder die Frequenz aus den Intensitäten der höheren Harmonischen der FourierSpektren. Ferner werden Kriterien für nichtlineares Verhalten der untersuchten Flüssigkeiten angegeben.

Ein besonderer Vorteil der Erfindung ist bei rheologischen Untersuchungen gegeben, die an Materialien mit hoher Nichtlinearität selbst bei geringsten Scherraten durchgeführt werden. Es gibt beispielsweise Polymere, die unmittelbar nach der Verstreckung sofort eine Verscherung zeigen. Die Relaxationszeiten der Moleküle im Polymer sind so groß, daß sie mit technisch praktikablen niedrigen Scherraten nicht mehr erfaßbar sind. Das Material geht unmittelbar in den nichtlinearen Zustand über (z.B. Scherverdünnung). Um dennoch auch bei diesen Materialien die Scherrate zu ermitteln, bei der das nichtlineare Verhalten einsetzt, werden erfindungsgemäß die Intensitäten der Obertöne (höherfrequente Bestandteile im fouriertransformierten Scherspektrum) für verschiedene Frequenzen und Amplituden ermittelt. Es wurde festgestellt, daß beispielsweise die Intensität des der dreifachen Grundfrequenz entsprechenden Obertons exponentiell mit der Amplitude der Materialanregung zunimmt. Dementsprechend kann bei Aufnahme der Abhängigkeit der Obertonintensität von der Amplitude der Anregung auf Anregungsbedingungen (Scherrate, Amplitude) rückgeschlossen werden, bei denen das Auftreten des dritten Obertons einsetzt (sogenannter "Onset"-Punkt). Die Scherrate des "Onset"-Punktes wird durch Rückextrapolation aus der Frequenzund Amplitudenabhängigkeit der Obertöne ermittelt. Die Bestimmung des Übergangsbereiches zwischen linearem und nichtlinearem Verhalten wird somit erfindungsgemäß erstmalig auch bei solchen Proben möglich, bei denen die Beobachtung linearen Verhaltens mit technisch praktikabeln Scherraten nur schwer oder nicht möglich ist.

Erfindungsgemäße Verfahren besitzen die folgenden Vorteile.

Es ist eine vollständige Charakterisierung eines nichtlinearen Verhaltens (z. B. Scherverdickungen oder Scherverflüssigungen) im Fourierraum möglich, wobei sowohl die Amplituden als auch die Phasen höherer harmonischer Beiträge erfaßt werden. Es sind Relaxationszeiten in Nicht-Gleichgewichts-Zuständen charakterisierbar. Es lassen sich die Scherdaten rauschfrei rekonstruieren und somit das Geschwindigkeits- oder Beschleunigungsverhalten des untersuchten Materials analytisch berechnen. Mit einem Scherzyklus lassen sich beliebig viele Scherraten erfassen (sog. "Multiplex"-Vorteil), da in einer harmonischen Anregung immer eine Vielzahl von Schergeschwindigkeiten enthalten sind. Es ergibt sich eine hohe Meßgeschwindigkeit, die eine Echtzeit-Viskositätsmessung im nichtlinearen Zustand ermöglicht. Es lassen sich "Memory"-Effekte messen, die im Fourier-Spektrum als Intensitäten bei geradzahligen Vielfachen der Anregungsfrequenz erkennbar sind.

Die erfindungsgemäß untersuchten Materialien umfassen alle flüssigen oder fließfähigen Materialien, insbesondere flüssige Lösungen, Polymerlösungen, Dispergate, Emulsionen, Schmelzen oder fließfähige Kunststoffe. Die erfindungsgemäß untersuchten Materialien können auch gas- oder dampfförmige Materialien oder elastische Festkörper (z.B. gummiartige Materialien) umfassen.

Ausführungsformen und weitere Vorteile der Erfindung werden unter Bezugnahme auf die beiliegenden Zeichnungen beschrieben. Es zeigen:

Fig. 1: eine Kurvendarstellung zur Illustration eines Fourier-Amplitudenspektrums; und

Fig. 2: eine Blockdarstellung einer Ausführungsform einer erfindungsgemäßen Vorrichtung.

Die folgende Erläuterung bezieht sich beispielhaft auf die Erfassung der Viskosität über eine Scherkraftmessung mit einem Rotationsviskosimeter. Die Erfindung ist jedoch darauf nicht beschränkt, sondern mit allen Anordnungen anwendbar, die für eine harmonische Anregung eines untersuchten Materials und die Aufnahme eines für die Flüssigkeitsbewegung charakteristischen Responsesignals in Reaktion auf die Anregung eingerichtet sind. Die Erfindung ist ferner nicht auf die Messung der Viskosität beschränkt, sondern auch auf damit in Zusammenhang stehende Materialparameter wie z. B. Relaxationszeiten im nichtlinearen Zustand oder die Energiedissipation durch innere Reibung anwendbar.

Zunächst wird die mathematische Grundlage für das erfindungsgemäße Verfahren beschrieben. Die klassische rheologische Beschreibung der Bewegung eines Massenelements (Ort-Zeit-Abhängigkeit) erfolgt durch die Differentialgleichung (2) :

$$m\ddot{x} + \eta\dot{x} + kx = A_0 \exp(i\omega t) \qquad\qquad (2)$$

mit der Lösung:

$$x = B_0 \exp(i\omega t + \delta) \qquad\qquad (3)$$

Bei harmonischer Anregung einer Flüssigkeit mit der Frequenz $\omega$ (rechter Teil von Gleichung (2)) ergibt sich somit eine harmonische Responsefunktion derselben Frequenz $\omega$, jedoch mit einer charakteristischen Phasenverschiebung $\delta$, die das Verhältnis von gespeicherter (k) zu dissipierter ($\eta$) Energie beschreibt.

Im nicht-Newtonischen Fall gilt $\eta = \eta(v)$ mit der Symmetrierelation $\eta(v) = \eta(-v) = \eta(|v|)$. Dies basiert auf der Idee, daß eine Geschwindigkeitsumkehr auch eine Kraftumkehr bedeutet, die Viskosität also in erster Näherung nur vom Betrag der Geschwindigkeit abhängig ist. Die Viskosität läßt sich in Abhängigkeit von der Geschwindigkeit in eine Taylorreihe entwickeln. Die Entwicklung kann sich auf die Frequenz der Anregung oder auf die Geschwindigkeit beziehen. Die Erfindung ist nicht auf die hier genannte geschwindigkeitsbezogene Taylorentwicklung beschränkt. Es ist alternativ auch eine zeitbezogene Tayloerentwicklung verwendbar. Im folgenden wird eine Taylorentwicklung in Bezug auf $v = 0$ betrachtet (die Faktoren $\eta_0$, a, b, ... können komplex sein).

$$\eta = \eta_0 + a\,|v| + b\,|v|^2 + ... \tag{4}$$

Nach harmonischer Anregung gemäß

$$x = A_0 \exp(i\omega_1 t) \text{ bzw.}$$

$$v = \dot{x} = i\omega_1 A_0 \exp(i\omega_1 t) \tag{5}$$

ist der Absolutwert der Geschwindigkeit durch Fourier-Analyse gemäß Gleichung (6) darstellbar:

$$|v| = |\dot{x}| = |i\omega_1 A_0 \exp(i\omega_1 t)|$$

$$|v| \sim 2/\pi - 4/\pi \left( \frac{\cos 2\omega_1 t}{3} + \frac{\cos 4\omega_1 t}{15} + \frac{\cos 6\omega_1 t}{35} ... \right)$$

$$|v| \sim a' + b' \cos(2\omega_1 t) + c' \cos(4\omega_1 t) + ... \tag{6}$$

Somit werden bei der Anregung höhere Harmonische der Grundfrequenz $\omega_1$ erzeugt. Wegen der Abhängigkeit vom Absolutwert der Schergeschwindigkeit $v$ enthält Gleichung (6) nur gerade Harmonische der Grundfrequenz $\omega_1$. Aus den Gleichungen (1), (4) und (6) ergibt sich:

$$F \sim i\omega_1 A_0(\eta_0 + a|v| + b|v|^2 + ...) \exp(i\omega_1 t)$$

$$F \sim (\eta_0 + a|v| + b|v|^2 + ...) \exp(i\omega_1 t)$$

$$F \sim \{\eta_0 + a[a' + b'\cos(2\omega_1 t) + c'\cos(4\omega_1 t) + ...] +$$

$$b[a' + b'\cos(2\omega_1 t) + c'\cos(4\omega_1 t) + ..]^2 ..\} \exp(i\omega_1 t) \tag{7}$$

Gleichung (7) ergibt nach Umformung und komplexer Schreibweise der cos-Funktion:

$$F \sim a''\exp(i\omega_1 t) + b''\exp(i3\omega_1 t) + c''\exp(i5\omega_1 t) + ... \tag{8}$$

Die Scherkraft F ist ein Beispiel für einen Meßparameter, der erfindungsgemäß mit einem Viskosimeter nach harmonischer Anregung mit der maximalen Amplitude $A_0$ in Abhängigkeit von der Zeit gemessen und erfaßt wird. Andere Beispiele wie insbesondere die optische Doppelbrechung als Meßparameter sind oben angegeben.

Zur Ermittlung rheologischer Eigenschaften des untersuchten Materials wird nun die Zeitfunktion F(t) einer Fourier-Analyse unterzogen, wobei das Amplituden- und/oder das Phasenspektrum der Fourier-Transformierten ermittelt bzw. die folgenden Datenumformungen betrachtet werden. Einzelheiten der Abtastung der Zeitfunktion und der Ermittlung der Fourier-Transformierten werden hier nicht angegeben, da dies den bekannten Algorithmen folgt, wie sie beispielsweise in "FFT-Anwendungen" von E. O. Brigham (Oldenbourg München 1997) beschrieben sind.

(a) Bestimmung der Parameter $\eta_0$, a, b, ...

Die Amplituden-Fourier-Analyse (Gleichung (8)) der Zeitfunktion F(t) liefert ein sogenanntes Scherspektrum mit Maxima bei $\omega_1$, $3\omega_1$, $5\omega_1$, ... etc.. Die Intensitäten der Maxima stehen unter Berücksichtigung der Gleichungen (7, 8) mit den linearen und nichtlinearen Parametern $\eta_0$, a, b etc. der Viskosität entsprechend der Entwicklung (4) in Beziehung.

Die weitere Auswertung umfaßt somit zunächst die Berechnung der Absolutwerte $\eta_0$, a, b, ... als Funktion der Geschwindigkeit v aus der Amplitude $A_0$ und der Grundfrequenz $\omega_1$ aus den Gleichungen (4) bis (8).

(b) Erfassung des Übergangs zwischen einem Newtonischen zu einem nicht-Newtonischen Zustand.

Zur Charakterisierung des Übergangs zwischen einem Newtonischen zu einem nicht-Newtonischen Zustand werden nur die ersten zwei Terme der Taylorentwicklung gemäß Gleichung (4) betrachtet. Die Differentialgleichung (2) lautet dann

$$A_0 \exp(i\omega t) = m\ddot{x} + \eta_0 \dot{x} + kx + a|\dot{x}|\dot{x} \qquad (9)$$

mit einem linearen Anteil, der für sich die o. a. Lösung (3) hätte, und einem nichtlinearen Anteil $(a|\dot{x}|\dot{x})$, der eine Abweichung von der Lösung (3) verursacht. Der Grad der Abweichung, insbesondere beim Übergang vom Newtonischem zum nicht-Newtonischen Zustand, hängt somit entscheidend vom Nichtlinearitäts-Parameter a ab, der dem zweiten Term in der Taylorentwicklung (4) entspricht.

Zur Charakterisierung des Verhaltens einer Flüssigkeit wird somit erfindungsgemäß die Schergeschwindigkeits- oder Scherratenabhängigkeit des Parameters a zum Beispiel durch Variation der Anregungs- oder Grundfrequenz erfaßt und ggf. mit vorbestimmten Grenzwerten verglichen.

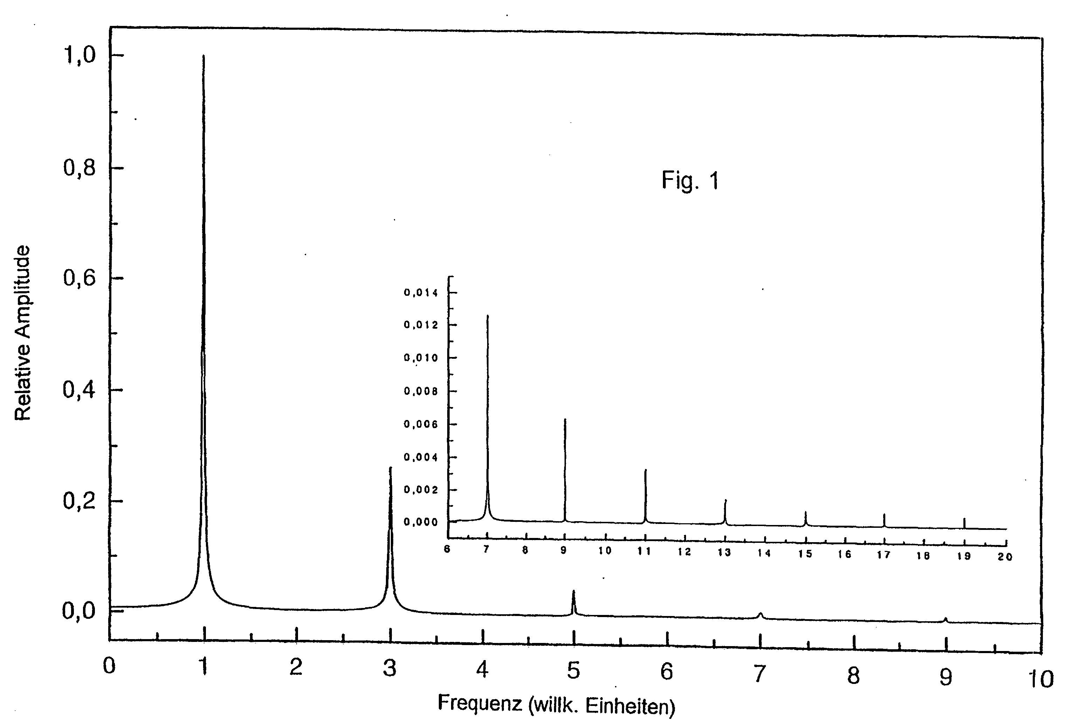

Fig. 1 zeigt die Kurvendarstellung eines simulierten Spektrums mit Scherverdünnung, bei dem eine Reduzierung der Viskosität auf 30% des Newtonischen Wertes angenommen wird (Annahme der Viskosität und der Entwicklungsparameter als reale, nichtkomplexe Größen). Es zeigt sich, daß das Spektrum selbst bei Abbruch der Taylorentwicklung (4) nach dem linearen Term höhere Harmonische enthält (Innenbild mit verändertem Maßstab). Dies ist ein besonders vorteilhaftes Ergebnis der mit der Erfindung genutzten Symmetrierelation der Geschwindigkeitsabhängigkeit. Die Zeitabhängigkeit des Betrags eines sinusförmigen Geschwindigkeitsverlaufes besitzt an den Minima Spitzenbereiche, die entscheidend zur Ausbildung höherer Komponenten im Scherspektrum beitragen.

(c) Erfassung nichtlinearen Verhaltens

Zur Charakterisierung des Grenzfalls des nicht-Newtonischen Zustands mit extremer Scherverdünnung werden die folgenden Betrachtungen angestellt. Extreme Scherverdünnung bedeutet, daß gemäß (10) oberhalb einer kritischen Geschwindigkeit $v_c$ die Viskosität verschwindet:

$$\eta = \eta_0 \text{ für } v < v_c \text{ bzw. } \eta = 0 \text{ für } v \geq v_c \qquad (10)$$

Die Scherkraft kann dann als Stufenfunktion angegeben werden , deren Fourier-Entwicklung gemäß (11) darstellbar ist:

$$F \sim [\exp(i\omega_1 t) + 1/3\exp(i3\omega_1 t) + 1/5\exp(i5\omega_1 t) + ...] \qquad (11)$$

Auf dieser Grundlage wird erfindungsgemäß ein Kriterium zur Abgrenzung zwischen Newtonischem und nicht-Newtonischem Verhalten auf der Grundlage der Intensitätsverhältnisse in einem Fourier-Spektrum der Scherkraft festgelegt und durch Vergleich eines Meßergebnisses mit dem Abgrenzungskriterium eine Zuordnung einer zu untersuchenden Flüssigkeit zu einer der Verhaltensweisen realisiert.

Ein Abgrenzungskriterium ergibt sich beispielsweise aus dem Amplitudenverhältnis (oder Verhältnis der Intensitäten I) der niedrigsten zwei Frequenzen $I(3\omega_1)/I(\omega_1) = 1/3$ oder aus der Einhüllenden der Entwicklungskoeffizienten gemäß $I(\omega) \sim 1/\omega$ oder aus den Amplitudenverhältnissen bei mehr als den zwei niedrigsten Frequenzen.

Alternativ ist die Erfassung nichtlinearen Verhaltens durch Vergleich der Meßergebnisse mit Simulationsdaten möglich. Aus den Intensitätsverhältnissen im Fourier-Spektrum der Scherkraft wird eine Peakhöhenverteilung ermittelt und mit Simulationsdaten eines Modell- oder eines Bezugsmaterials verglichen. Die Simulationsdaten umfassen eine entsprechende Peakhöhenverteilung, die unter bestimmten Simulationsparametern bzw. unter bestimmten Meßparametern aufgenommen worden ist. Die Wahl der zur Ermittlung der Peakhöhenverteilung berücksichtigten Frequenz- und/oder Phasenkomponenten des Fourier-Spektrums ist anwendungsabhängig.

(d) Erfassung der Scherverdickung

Das Intensitätsverhältnis $V = I(3\omega)/I(\omega)$ als Funktion der Grundfrequenz $\omega$ verhält sich wie folgt. Bei niedrigen Schergradienten (lineares Verhalten) ist das Verhältnis gleich Null. Bei sehr hohen Schergradienten, bei denen die Kopplung zwischen den Oberflächen stark ist, wird die Scherkraft gemäß den Gleichungen (2, 3) einfach durch den konstanten Term gegeben. Die Abhängigkeit $V(\omega)$ erreicht im Amplituden-Scherspektrum gemäß Gleichung (9) ein Maximum, wo die Störung und Nichtlinearität maximal sind. Das Einsetzen des nichtlinearen Verhaltens kann aber bereits vor Erreichen des Maximums festgestellt werden, so z.B. wenn für die Intensität des ersten Obertons $I(3\omega_1) > 0$ gilt. Sobald der Oberton entsprechend $3\omega_1$ im Spektrum erscheint, wird das nichtlineare Verhalten des untersuchten Materials erfaßt.

Erfindungsgemäß wird somit die Abhängigkeit $V(\omega)$ aufgenommen, um das rheologische Verhalten einer Flüssigkeit zu charakterisieren. Aus $V_{max}$ kann dann die Scherverdickung ermittelt werden. Zur weiteren Charakterisierung des rheologischen Verhaltens wird die Abhängigkeit $V(\omega)$ für verschiedene Amplituden der harmonischen Anregung des untersuchten Materials aufgenommen.

(e) Erfassung von Relaxationsvorgängen

Auf molekularer Ebene ist der Übergang vom linearen zum nichtlinearen Verhalten so zu verstehen, daß ein Molekül (z. B. Polymer) bei Ausübung einer Scherkraft mit einer genügend hohen Scherrate oder -geschwindigkeit nicht mehr Zeit hat, um seine (Basis-) Konformation des unbelasteten Zustands einzunehmen, so daß sich die Wechselwirkung mit den benachbarten Molekülen nicht mehr linear mit der Scherrate ändert. Die Molekülform ist dann selbst geschwindigkeitsabhängig. Die mittlere Zeit zur Einnahme der Basiskonformation bei linearem Verhalten wird als lineare Relaxationszeit $\tau$ bezeichnet. Sie ist beispielsweise bei Polymeren stark massenabhängig ($\tau \sim M^2$ oder sogar $\tau \sim M^3$).

Erfindungsgemäß werden nun durch die Erfassung des nichtlinearen Zustands die nichtlinearen Relaxationszeiten in Abhängigkeit von der Scherrate (oder Grundfrequenz) in verschiedenen Nicht-Gleichgewichts-Zuständen erfaßt.

(f) Fourier-Rücktransformation

Zur Ermittlung von Geschwindigkeiten oder Beschleunigungen der Massenelemente strömender Flüssigkeiten aus Orts-Zeit-Funktionen wird erfindungsgemäß die Tatsache ausgenutzt, daß die Fourier-Transformation eine reversible Transformation ist.

Das diskrete Fourier-Spektrum der digital erfaßten Zeitfunktion S(t) des gemessenen Meßparameters S wird zur Bildung komplexer Zeitdaten rücktransformiert, aus denen sowohl die Amplituden als auch die Phasen sämtlicher Harmonischer ermittelbar sind. Damit wird das ursprüngliche Zeitsignal vollständig gemäß:

$$S(t) = \sum_n A_n \cos(n\omega_1 t + \phi_n) \tag{12}$$

rekonstruiert.

Aus S(t) lassen sich mit hoher Genauigkeit und Geschwindigkeit für jeden Punkt während eines Scherzyklus die Geschwindigkeiten und/oder Beschleunigungen ermitteln, so daß sich für praktische Anwendungen das Geschwindigkeits- und/oder Beschleunigungsverhalten einer Substanz in einem technischen System vorhersagen läßt.

(g) Erfassung von "Memory"-Effekten im untersuchten Material

Sämtliche Schergradienten erscheinen während eines vollen Scherzyklus zweifach. Die obigen Ableitungen erfolgten unter der Annahme einer Unabhängigkeit der Viskosität von der Geschwindigkeitsrichtung und führten zum Beitragen ungerader Vielfacher der Grundfrequenz im Fourier-Spektrum. Wenn nun auch gerade Vielfache der Grundfrequenz im Fourier-Spektrum auftreten, so bedeutet dies eine Richtungsabhängigkeit der Viskosität.

Erfindungsgemäß wird somit das Fourier-Spektrum darauf geprüft, ob geradzahlige Vielfache der Grundfrequenz enthalten sind. Das Auftreten geradzahliger Vielfacher und ihre Intensitäten erlauben eine Aussage über "Memory"-Effekte, die die Viskosität in Abhängigkeit davon charakterisieren, ob die Scherspannung gerade aufgebaut oder freigegeben wird.

Die oben erläuterten Verfahrensweisen (a) bis (g) sind erfindungsgemäß jeweils temperaturabhängig durchführbar.

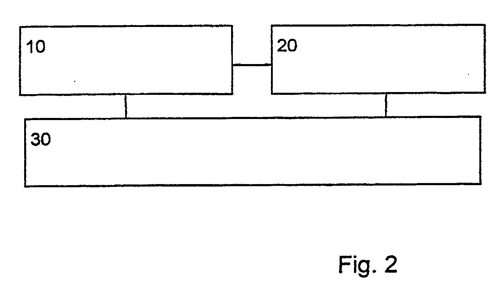

Eine Vorrichtung zur Durchführung des erfindungsgemäßen Verfahrens enthält gemäß Fig. 2 eine Meßanordnung 10 zur Messung der Zeitfunktion eines charakteristischen rheologischen Parameters, eine Transformationsanordnung 20 zur Fourier-Transformation der Zeitfunktion in den Fourier-Raum bzw. zur entsprechenden Rücktransformation und eine Steuer- und Anzeigeeinheit 30, die zur Einstellung der Betriebsparameter der Meßanordnung 10 und zur Datenübernahme von der Transformationsanordnung 20 eingerichtet ist. Die Meßanordnung 10 ist beispielsweise ein temperierbares Schwingungs- oder Rotationsviskosimeter oder ein anderes Meßgerät, das zur Aufbringung einer harmonischen Anregung auf eine zu untersuchende Flüssigkeit und zur Erfassung eines Responsesignals eingerichtet ist. Die Steuer- und Anzeigeeinheit 30 und die Transformationsanordnung 20 können als gemeinsame Einheit z. B. in einem Personalcomputer aufgebaut sein.

Die Erfindung ist bei allen technischen Vorgängen anwendbar, bei denen die rheologischen Eigenschaften einer Flüssigkeit von Interesse sind. Es können beispielsweise Strömungsvorgänge in Ungleichgewichten wie z. B. beim Extrudieren, Spritzgießen, Rühren, Pumpen, Schichtgießen von Polymeren, Lösungen, Emulsionen o. dgl. charakterisiert werden.

Da die Erfindung ein empfindliches Mittel zur Erkennung des Übergangs vom linearen zum nichtlinearen Verhalten einer strömenden Flüssigkeit darstellt, werden von der Erfindung auch die Verwerdung von Überwachungssystemen umfaßt, die zur Realisierung der erfindungsgemäßen Verfahrensweisen eingerichtet sind. Um unnötige Energieverluste beim Transport einer Flüssigkeit zu vermeiden, kann beispielsweise vorgesehen sein, eine Vorrichtung gemäß Fig. 2 an ein System anzuschließen, in dem Flüssigkeiten bewegt werden. Sobald die Steuer- und Anzeigeeinheit den beginnenden Übergang zum nichtlinearen Verhalten oder zu einer Scherverdickung erfaßt, wird ein Signal an ein Antriebsund/oder Temperierungssystem gegeben, um die Flüssigkeitsbewegung entsprechend zu beeinflussen. Die Vorrichtung gemäß Fig. 2 ist in diesem Fall Teil eines Regelkreises.

**Patentansprüche**

1. Verfahren zur Erfassung rheologischer Materialeigenschaften, mit den Schritten:

   - harmonische Anregung eines zu untersuchenden Materials mindestens einer Grundfrequenz $\omega_1$,
   - Messung mindestens eines Parameters F, der in Reaktion auf die harmonische Anregung veränderlich und zur Bestimmung der Viskosität $\eta$ des Materials geeignet ist, durch Aufnahme einer Zeitfunktion F(t) des Parameters,
   - Fourier-Transformation der Zeitfunktion F(t) zur Bildung eines Scherspektrums, wobei
   - die Intensitäten von Maxima des Scherspektrums bei den ungeradzahligen Vielfachen $\omega_1$, $3\omega_1$, $5\omega_1$, ... der Grundfrequenz $\omega_1$ erfasst werden,

   **dadurch gekennzeichnet, daß**

   - die rheologischen Materialeigenschaften Parameter einer Taylorentwicklung der Viskosität $\eta$ gemäß $\eta = \eta(v)$ oder $\eta = \eta(t)$ sind die aus den erfassten Intensitäten ermittelt werden, und
   - zur Feststellung eines linearen oder nichtlinearen Verhaltens eine Schergeschwindigkeits- oder Scheramplitudenabhängigkeit oder die Verhältnisse der erfassten Intensitäten der Maxima des Scherspektrums ermittelt und mit vorbestimmten Grenzwerten oder einem Abgrenzungs- oder Simulationskriterium verglichen werden.

2. Verfahren gemäß Anspruch 1, bei dem die rheologischen Materialeigenschaften die Parameter $\eta_0$, a, b, ... die Parameter der Taylorentwicklung der Viskosität $\eta$ gemäß $\eta = \eta_0 + a \mid v \mid + b \mid v^2 \mid + ...$ sind.

3. Verfahren gemäß Anspruch 1 oder 2, bei dem das Abgrenzungskriterium das Verhältnis der Intensität I der niedrigsten zwei Frequenzkomponenten $I(3\omega_1)/I(\omega_1)$ ist und ein nichtlineares Verhalten festgestellt wird, wenn das Verhältnis der Intensitäten größer oder kleiner als ein vorbestimmter Wert ist.

4. Verfahren gemäß Anspruch 1 oder 2, bei dem das Abgrenzungskriterium die Einhüllende der Intensitäten des Scherspektrums ist und ein nichtlineares Verhalten festgestellt wird, wenn sich die Intensitäten gemäß $I(\omega) \sim 1/\omega$ verhalten.

5. Verfahren gemäß Anspruch 1 oder 2, bei dem ein nichtlineares Verhalten festgestellt wird, wenn für die Intensität I der Frequenzkomponente bei $3\omega_1$ gilt $I(3\omega_1) > 0$.

**6.** Verfahren gemäß einem der vorhergehenden Ansprüche, bei dem die Frequenz $\omega$ der harmonischen Anregung variiert und die Abhängigkeit $V(\omega)$ des Intensitätsverhältnis $V = I(3\omega)/I(\omega)$ von der Grundfrequenz $\omega$ ermittelt wird, wobei ein Zustand maximaler Nichtlinearität erfaßt wird, wenn das Intensitätsverhältnis $V(\omega)$ maximal ist.

**7.** Verfahren gemäß Anspruch 6, bei dem die Amplitude der harmonischen Anregung variiert und die Abhängigkeit des nichtlinearen rheologischen Verhaltens von der Scheramplitude erfaßt wird.

**8.** Verfahren gemäß einem der vorhergehenden Ansprüche, bei dem nichtlineare Relaxationszeiten im Material von Abhängigkeit von der Scherrate oder Grundfrequenz in verschiedenen Nicht-Gleichgewichts-Zuständen erfaßt wird.

**9.** Verfahren gemäß einem der vorhergehenden Ansprüche, bei dem zur Erfassung der Richtungsabhhängigkeit der Viskosität vom Aufbau oder der Freigabe der Scherspannung ermittelt wird, ob geradzahlige Vielfache der Grundfrequenz im Scherspektrum auftreten.

**10.** Verfahren gemäß einem der vorhergehenden Ansprüche, bei dem zur Ermittlung von Orts-Zeit-Funktionen, Geschwindigkeiten und/oder Beschleunigungen der Massenelemente strömender Flüssigkeiten die Fourier-Transformation umgekehrt wird, so daß die Zeitabhängigkeit $F(t)$ gemäß

$$F(t) = \sum_{n} A_n \cos\left(n\omega_i t + \phi_n\right)$$

rekonstruiert wird.

**11.** Verfahren gemäß einem der vorhergehenden Ansprüche, bei dem die Erfassung der rheologischen Materialeigenschaften in Abhängigkeit von der Temperatur durchgeführt wird.

**12.** Verfahren gemäß einem der vorhergehenden Ansprüche, bei dem der Parameter F eine makroskopisch oder mikroskopisch wirkende Kraftgröße ist, die durch eine makroskopische Kraftmessung bzw. durch eine optische Doppelbrechungsmessung ermittelt wird.

**13.** Verfahren gemäß einem der vorhergehenden Ansprüche, das mit einer Messanordnung (10) durchgeführt wird, die ein temperierbares Schwingungs- oder Rotationsviskosimeter zur harmonischen Anregung des Materials und zur Messung von mindestens einem Parameter F enthält.

**14.** Verfahren gemäß Anspruch 13, bei dem die Messanordnung (10) das Teil eines Regelkreises ist, in dem bei Erfassung eines beginnenden Übergangs des Materials zum nichtlinearen Verhalten oder zu einer Scherverdickung ein Regelsignal an ein Antriebs- und/oder Temperierungssystem gegeben wird.

**15.** Verwendung eines Verfahrens gemäß einem der vorhergehenden Ansprüche zur Charakterisierung von Strömungsvorgängen in Ungleichgewichten wie ein Extrudieren, ein Spritzgießen, ein Rühren, ein Pumpen oder ein Schichtgießen des Materials.

**Claims**

**1.** Method for detecting rheological material properties, having the steps:

- harmonically exciting a material to be examined with at least one fundamental frequency $\omega_1$,
- measuring at least one parameter F which is variable in response to the harmonic excitation and is suitable for determining the viscosity $\eta$ of the material, by recording a time function $F(t)$ of the parameter,
- Fourier transformation of the time function $F(t)$ to form a shear spectrum, wherein
- the intensities of maxima of the shear spectrum at the uneven multiples $\omega_1$, $3\omega_1$, $5\omega_1$, of the fundamental frequency $\omega_1$ are detected,

**characterised in that**

- the rheological material properties are parameters of a Taylor series expansion of the viscosity $\eta$ according

to $\eta = \eta(v)$ or $\eta = \eta(t)$ which are determined from the detected intensities and,

- to detect a linear or non-linear response, a shear velocity or shear amplitude function or the ratios of the detected intensities of the maxima of the shear spectrum are determined and compared with predetermined limit values or with a demarcation or simulation criterion.

2. Method according to claim 1, in which the rheological material properties are the parameters $\eta_0$, a, b, ..., the parameters of the Taylor series expansion of the viscosity $\eta$ according to $\eta = \eta_0 + a \mid v \mid + b \mid v^2 \mid + ...$

3. Method according to claim 1 or 2, in which the demarcation criterion is the ratio of the intensity I of the two lowest frequency components $I(3\omega_1)/I(\omega_1)$ and a non-linear response is detected when the ratio of the intensities is greater or smaller than a predetermined value.

4. Method according to claim 1 or 2, in which the demarcation criterion is the envelope of the intensities of the shear spectrum and a non-linear response is detected when the intensities behave according to $I(\omega)\sim 1/\omega$.

5. Method according to claim 1 or 2, in which a non-linear response is detected when $I(3\omega_1) > 0$ applies for the intensity I of the frequency component at $3\omega_1$.

6. Method according to one of the preceding claims, in which the frequency $\omega$ of the harmonic excitation varies and the dependence $V(\omega)$ of the intensity ratio $V = I(3\omega_1)/I(\omega)$ on the fundamental frequency $\omega$ is determined, a state of maximum nonlinearity being detected when the intensity ratio $V(\omega)$ is at a maximum.

7. Method according to claim 6, in which the amplitude of the harmonic excitation varies and the dependence of the non-linear rheological response on the shear amplitude is detected.

8. Method according to one of the preceding claims in which non-linear relaxation times in the material are detected as a function of the shear rate or fundamental frequency in various states of non-equilibrium.

9. Method according to one of the preceding claims in which, to determine the direction dependence of viscosity on build-up or release of shear stress, it is determined whether even multiples of the fundamental frequency appear in the shear spectrum.

10. Method according to one of the preceding claims in which, to determine position-time-functions, velocities and/or accelerations of mass elements of flowing fluids, the Fourier transformation is reversed, such that the time function F(t) is reconstructed according to

$$F(t) = \sum_n A_n \cos\,(n\omega_i t + \varphi_n).$$

11. Method according to one of the preceding claims in which the rheological material properties are detected as a function of the temperature.

12. Method according to one of the preceding claims in which the parameter F is a macroscopically or microscopically acting force variable which is determined by a macroscopic force measurement or by optical measurement of double refraction.

13. Method according to one of the preceding claims which is carried out with a measuring arrangement (10) which contains a temperature-stabilised oscillating disk or rotational viscometer for harmonically exciting the material and for measuring at least one parameter F.

14. Method according to claim 13 in which the measuring arrangement (10) forms the part of a control loop in which a control signal is given to a drive and/or temperature stabilising system on detection of the start of a transition of the material to non-linear response or shear thickening.

15. Use of a method according to one of the preceding claims for characterising flow processes in states of non-equilibrium such as extruding, injection moulding, stirring, pumping or laminar casting of the material.

**Revendications**

1. Procédé pour enregistrer des propriétés rhéologiques d'un matériau, comprenant les étapes :

   - excitation harmonique d'un matériau à examiner avec au moins une fréquence de base $\omega_1$,
   - mesure d'au moins un paramètre F qui est modifiable en réaction à l'excitation harmonique et adapté à la détermination de la viscosité $\eta$ du matériau, en enregistrant une fonction temps F(t) du paramètre,
   - transformation Fourier de la fonction temps F(t) pour créer un spectre de cisaillement,
   - les intensités des maxima du spectre de cisaillement étant saisies aux multiples impairs $\omega_1$, $3\omega_1$, $5\omega_1$ ... de la fréquence de base $\omega_1$,

   **caractérisé en ce que**

   - les propriétés du matériau sont des paramètres d'un développement Taylor de la viscosité $\eta$ selon $\eta = \eta(v)$ ou $\eta = \eta(t)$ qui sont calculés à partir des intensités enregistrées et
   - **en ce que**, pour déterminer un comportement linéaire ou non-linéaire, une vitesse de cisaillement ou une fonction de l'amplitude de cisaillement ou les rapports des intensités des maxima du spectre de cisaillement sont calculés et comparés avec des valeurs limites prédéterminées ou un critère de délimitation ou de simulation.

2. Procédé selon la revendication 1, dans lequel les propriétés rhéologiques du matériau sont les paramètres $\eta_0$, a, b, ... les paramètres du développement de Taylor de la viscosité $\eta$ selon $\eta = \pi_0 + a \mathbin{\dot{|}} v \mathbin{\dot{|}} + b \mathbin{\dot{|}} v^2 + ...$ .

3. Procédé selon la revendication 1 ou 2, dans lequel le critère de délimitation est le rapport de l'intensité I des deux composants de la fréquence les plus bas $I(3\omega_1)/I(\omega_1)$ et un comportement non-linéaire est constaté si le rapport des intensités est plus grand ou plus petit qu'une valeur prédéterminée.

4. Procédé selon la revendication 1 ou 2, dans lequel le critère de délimitation est l'enveloppante des intensités du spectre de cisaillement et un comportement non-linéaire est constaté si les intensités se comportent selon $I(\omega)$ $\sim 1/\omega$.

5. Procédé selon la revendication 1 ou 2, dans lequel un comportement non-linéaire est constaté si pour l'intensité I du composant de la fréquence à $3\omega_1$ il vaut $I(3\omega_1) > 0$.

6. Procédé selon l'une quelconque des revendications précédentes, dans lequel la fréquence $\omega$ de l'excitation harmonique varie et la fonction $V(\omega)$ du rapport d'intensité $V = I(3\omega)/I(\omega)$ est calculé par la fréquence de base $\omega$, un état de non-linéarité maximal étant enregistré si le rapport d'intensité $V(\omega)$ est maximal.

7. Procédé selon la revendication 6, dans lequel l'amplitude de l'excitation harmonique varie et la fonction du comportement rhéologique non-linéaire est enregistrée par l'amplitude de cisaillement.

8. Procédé selon l'une quelconque des revendications précédentes, dans lequel des temps de relaxation non-linéaires dans le matériau sont enregistrés par la fonction du taux de cisaillement ou de la fréquence de base dans différents états de non-équilibre.

9. Procédé selon l'une quelconque des revendications précédentes, dans lequel pour déterminer la fonction directionnelle de la viscosité, on calcule par la structure ou la libération de la tension de cisaillement si des multiples paires de la fréquence de base apparaissent dans le spectre de cisaillement.

10. Procédé selon l'une quelconque des revendications précédentes, dans lequel pour le calcul des fonctions lieu-temps, des vitesses et/ou accélérations des éléments de masse de liquides coulantes, la transformation Fourier est inversée, de façon à ce que la fonction temps F(t) est reconstruite selon $F(t) = \Sigma A_n \cos(n\omega it + \phi_n)$.

11. Procédé selon l'une quelconque des revendications précédentes, dans lequel l'enregistrement des propriétés rhéologiques du matériau est effectué en fonction de la température.

12. Procédé selon l'une quelconque des revendications précédentes, dans lequel le paramètre F est un ordre de force agissant de façon macroscopique ou microscopique, qui est calculé par une mesure macroscopique de la force ou par une mesure optique à réfraction double.

13. Procédé selon l'une quelconque des revendications précédentes, réalisé par un dispositif de mesure (10) comprenant un viscosimètre à rotation ou à oscillation tempérisable pour l'excitation harmonique du matériau et pour la mesure au moins du paramètre F.

14. Procédé selon la revendication 13, dans lequel le dispositif de mesure (10) est la partie d'un circuit de réglage, où lorsqu'une transition débutante du matériau à un comportement non-linéaire ou un épaississement de cisaillement est enregistré, un signal de régulation est donné à un système de commande ou de températion.

15. Utilisation d'un procédé selon l'une quelconque des revendications précédentes pour la description de processus de flux dans des déséquilibres comme une extrusion, un moulage par injection, un remuage, pompage ou un moulage par couches du matériau.

Fig. 1

10

20

30

Fig. 2